# EUROPÄISCHE PATENTSCHRIFT

(11) **EP 3 642 521 B1**
(45) Veröffentlichungstag und Bekanntmachung des Hinweises auf die Patenterteilung: **06.10.2021**
(21) Anmeldenummer: 18729420.2
(22) Anmeldetag: 06.06.2018
(51) Int. Cl.: F16K 27/07, B08B 9/00, B08B 9/093, B67D 1/08, B05B 15/70, B05B 15/555, B05B 13/06, B08B 9/08

(54) **ANSCHLUSSKOPF UND VENTILKNOTEN**
CONNECTION HEAD AND VALVE MANIFOLD
TÊTE DE RACCORDEMENT ET NOEUDS DE VANNES

(30) Priorität: 23.06.2017 CH 8312017
(43) Veröffentlichungstag der Anmeldung: 29.04.2020
(73) Patentinhaber: GEA Aseptomag AG, 3422 Kirchberg (CH)
(72) Erfinder: BUSCH, Heiko, 24944 Flensburg (DE); GUTTE, Reimar, 30938 Burgwedel (DE); HAGNAUER, Thomas Christian, 3608 Thun (CH); LANGENEGGER, Urs, 3076 Worb (CH)
(74) Vertreter: Eisenführ Speiser
(86) Internationale Anmeldenummer: PCT/EP2018/064848
(87) Internationale Veröffentlichungsnummer: WO 2018/234036

(56) Entgegenhaltungen:
- EP-A2- 0 332 806
- WO-A1-01/71228
- CH-A2- 706 952
- DE-A1- 2 751 733
- DE-U1-202005 004 711
- DE-U1-202005 004 711
- DE-U1-202006 004 174
- DE-U1-202011 102 059
- DE-U1-202011 102 059

## Beschreibung

Die Erfindung betrifft einen Anschlusskopf nach dem Oberbegriff des Anspruchs 1 und einen Ventilknoten nach dem Oberbegriff des Anspruchs 8.

Internationale Warenströme sind auch für empfindliche Güter, beispielsweise des Lebensmittelsektors, mehr denn je von Bedeutung. Von großem Interesse sind dabei Warenströme über weite Entfernung hinweg, oftmals von einem Kontinent zu einem anderen.

Im Lebensmittelbereich ist es beispielsweise von kommerziellem Interesse, in Südamerika geerntete Früchte dort zu einem flüssigen Lebensmittelgrundstoff oder Lebensmittelprodukt zu verarbeiten. Dieser Grundstoff oder dieses Produkt wird nach seiner Gewinnung auf dem Seewege nach Europa gebracht und dort zum endgültigen Lebensmittelprodukt verarbeitet. Auch andere Transportwege von Kontinent zu Kontinent werden erschlossen, beispielsweise zwischen Asien und Europa und Südamerika und Asien.

Dies ist jedoch nur möglich, wenn auf dem vollständigen Transportweg hygienische, vorzugsweise aseptische, Bedingungen vorliegen. Die Bereitstellung dieser Bedingungen stellt eine große technische Herausforderung dar.

Der Transport flüssiger Vorprodukte erfolgt in einem so genannten Tankcontainer. Dabei handelt es sich um eine nach Normung gefertigte Rahmenkonstruktion, die einen Tank bzw. einen Behälter beinhaltet. Dieser ist mit einer Ventilvorrichtung zum Befüllen und Entleeren versehen.

Eine sehr vorteilhafte Ventilvorrichtung eines Tankcontainers wird in der CH 706952 A2 vorgeschlagen. Diese Ventilvorrichtung umfasst Mittel, mit denen eine Keimbarriere innerhalb der Ventilvorrichtung ausgebildet werden kann. Die Keimbarriere wird beispielsweise am Ende des Befüllens in Südamerika ausgebildet und erst beim Entleeren des Behälters in Europa wieder entfernt. Dank dieser Keimbarriere gelingt der vollständige Transport inklusive Verschiffung unter aseptischen Bedingungen.

Wichtig ist es nun, einen Keimeintrag in das Produkt beim Verbinden der Ventilvorrichtung des Tankcontainers mit dem Gegenstück in der Befüll- oder Entnahmestation zu verhindern.

Im kleineren Maßstab ist eine Lösung beispielsweise von Bierfässern bekannt, an die zum Befüllen oder Entleeren ein Behandlungskopf angeschlossen wird. Die DE 10 2014 106 203 A1 zeigt beispielhaft einen solchen Behandlungskopf.

Anschlussköpfe sind auch aus der DE 20 2011 102 059 U1, der DE 27 51 733 A1, der EP 0 332 807 A2, der DE 20 2006 004 174 U1, und aus der WO 01/71228 A1 bekannt geworden.

Es ist daher Aufgabe der Erfindung, einen Anschlusskopf und einen Ventilknoten zu schaffen, mit denen das Befüllen oder Entleeren eines Behälters unter verbesserten hygienischen Bedingungen ermöglicht ist.

Diese Aufgabe wird gelöst durch einen Anschlusskopf mit den Merkmalen des ersten Anspruchs und einen Ventilknoten mit den Merkmalen des zehnten Anspruchs. Die abhängigen Ansprüche geben vorteilhafte Weiterbildungen an.

Der Anschlusskopf besitzt ein erstes Ventil zum Absperren eines Produktanschlusses von einem Innenraum des Anschlusskopfes. Ein zweites Ventil am Anschlusskopf sorgt für eine Absperrbarkeit eines Abflusses aus dem Innenraum. Eine Reinigungsvorrichtung ist vorgesehen, die zur Reinigung des Innenraumes und eines Behälteranschlusses ausgebildet und angeordnet ist. Die Reinigung kann vorteilhaft die Sterilisation des Innenraumes des Anschlusskopfes umfassen, beispielsweise durch geeignete Wahl eines Fluides, welches mit Hilfe der Reinigungsvorrichtung eingebracht wird. Ein solches Fluid kann beispielsweise Heißwasserdampf sein. Die Absperrbarkeit von Produktanschluss und Abfluss bewirkt zusammen mit einer Reinigungsvorrichtung sehr hygienische bis aseptische Bedingungen im Innenraum und am Behälteranschluss des Anschlusskopfes. Dadurch ist es möglich, den Keimeintrag bei Befüllung oder Entleerung eines Behälters in erheblichem Umfang zu verringern.

Die Reinigungsvorrichtung umfasst einen Strahlreiniger. Reinigungsmittel, das in einem Strahl auf eine Oberfläche trifft, besitzt eine zusätzliche mechanische Komponente, die die Reinigungswirkung vertieft. Dies erlaubt schnellere Reinigungszeiten und den Einsatz weniger aggressiver Reinigungsmittel.

Durch Ausformen wenigstens eines Strahlaustritts des Strahlreinigers derart, dass ein Strahl des Reinigungsmittels durch den Behälteranschluss aus dem Anschlusskopf austritt, wird die beim Reinigen an den Anschlusskopf angeschlossene Ventilvorrichtung in die vorteilhafte Strahlreinigung mit einbezogen und so die Reinigungswirkung vertieft.

In einer anderen Weiterbildung umfasst der Strahlreiniger eine Sprühkugel, welche durch ihre Symmetrie die Reinigungswirkung weiter verbessert.

Die hygienischen Bedingungen im Anschlusskopf werden zusätzlich verbessert, indem die Reinigungsvorrichtung gegen den Innenraum absperrbar ausgeführt ist. Damit wird die Entstehung von Verschmutzung deutlich verringert.

Sehr gute Reinigungseffekte werden zusätzlich erzielt, wenn die Reinigungsvorrichtung in eine Reinigungsstellung innerhalb des Innenraums und in eine Ruhestellung, in der sie vom Innenraum getrennt ist, bringbar ist. Dadurch ist sie beim Reinigen tief im Innenraum, so dass dieser gut gereinigt wird, und behindert bei Befüllen und Entleeren den Produktstrom nicht.

Eine Anordnung der Reinigungsvorrichtung auf einer Seite des Innenraums, die einer aus dem Innenraum ausmündenden Abflussöffnung gegenüberliegt, ermöglicht ein Ausrichten des Anschlusskopfes an der Schwerkraft derart, dass die Reinigung durch gesicherten Ablauf der Reinigungsmittel aus dem Innenraum und dem Anschlusskopf verbessert wird.

Eine andere Weiterbildung sieht vor, die dem Innenraum zugewandten Teile des ersten Ventils durch eine passend ausgebildete und angeordnete Reinigungsvorrichtung zu reinigen. Die Reinigung wird so vertieft, indem auch das erste Ventil gründlich gereinigt wird, welches sich im Produktweg befindet.

Eine wiederum andere Weiterbildung schlägt ein erstes Ventil vor, welches aufgrund seiner Bauart leicht zu reinigen ist und somit ein hygienisches Absperrmittel bildet.

Ein Ventilknoten mit einem wie vorstehend beschriebenen Anschlusskopf bildet ein flexibles Mittel, um eine Verbindung zwischen einem Tankcontainer und einer Prozessanlage unter sehr hygienischen und aseptischen Bedingungen herzustellen.

Anhand eines Ausführungsbeispiels und seiner Weiterbildungen sollen die Erfindung näher erläutert und die Darstellung der Wirkungen und Vorteile vertieft werden.

Es zeigen:
- **Fig. 1:**: Schematische Darstellung eines Ventilknotens mit einem Anschlusskopf und einen daran angeschlossenen Tankcontainer;
- **Fig. 2:**: Perspektivische Ansicht des Anschlusskopfes;
- **Fig. 3:**: Schnitt durch den Anschlusskopf in einer Ebene mit einer Reinigungsvorrichtung, einem Behälteranschluss und einem ersten Ventil;
- **Fig. 4:**: Schnitt durch den Anschlusskopf in einer Ebene mit der Reinigungsvorrichtung und einem zweiten Ventil.

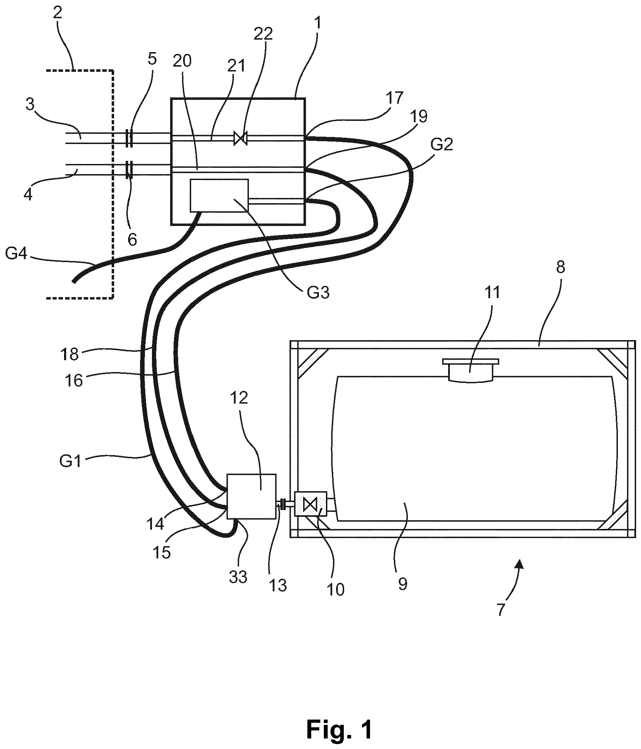

Die **Fig. 1** zeigt in einer schematischen Darstellung eine Anordnung mit einem Ventilknoten **1.** Der Ventilknoten **1** ist an eine Prozessanlage **2** angeschlossen. Die Prozessanlage **2** kann eine Anlage zur Herstellung eines Vorproduktes oder eines Endproduktes sein. Alternativ kann sie eine Anlage zur Umladung oder zur Endverarbeitung eines Vorproduktes sein. Die Prozessanlage **2** weist eine für den Prozess geeignete Produktverrohrung **3** auf, die das Produkt den notwendigen Verarbeitungsstellen zuführt. Die Prozessanlage **2** besitzt außerdem eine Reinigungseinrichtung **4,** die Bereitstellung und Verteilung von Reinigungsmittel innerhalb der Prozessanlage **2** ermöglicht. Der Ventilknoten **1** ist an die Produktverrohrung **3** und die Reinigungseinrichtung **4** angeschlossen, beispielsweise mit Hilfe einer lösbaren Produktkupplung **5** und einer lösbaren Reinigungskupplung **6.** Der Ventilknoten **1** dient als Schnittstelle zwischen der Prozessanlage **2** und einem Tankcontainer **7.**

Der Tankcontainer **7** umfasst einen Rahmen **8,** in welchem ein Behälter **9,** der Tank, angebracht ist. Der Rahmen ist standardisiert ausgeführt, vorzugweise nach Standards im Transportgeschäft, und ermöglicht so einen technisch und wirtschaftlich vorteilhaft einfachen Schiffs-, Bahn- und LKW-Transport. Am Behälter **9** ist eine Ventilvorrichtung **10** angebracht, die zum Befüllen und Entleeren genutzt wird. Vorteilhaft ist sie für den aseptischen Transport so ausgeführt, dass in ihr eine Keimbarriere während des Transports ausgebildet ist. Eine vorteilhafte Ausführung ist diejenige gemäß CH 706952 A2**.** Der Behälter **9** kann ein so genanntes Mannloch **11** besitzen, das für Inspektions-, Wartungs- und Reinigungsarbeiten nutzbar ist. Auch hier ist es notwendig, Keimeintrag zu verhindern. Zu diesem Zweck kann das Mannloch **11** eine Keimbarriere umfassen, die beispielsweise gemäß der DE 10 2011 054 137 A1 gestaltet ist.

Damit eine Verbindung zum Befüllen oder Entleeren oder beidem zwischen Ventilknoten **1** und Ventilvorrichtung **10** des Behälters **9** hergestellt werden kann, umfasst der Ventilknoten **1** einen Anschlusskopf **12.**

Der Anschlusskopf **12** besitzt einen Behälteranschluss **13,** mit dem er mit der Ventilvorrichtung **10** lösbar verbunden ist. Ein Produktanschluss **14** und ein Reinigungsmittelanschluss **15** sind am Anschlusskopf **12** vorgesehen und schaffen eine Verbindbarkeit mit dem Ventilknoten **1.**

An den Produktanschluss **14** ist eine Produktleitung **16** angeschlossen, die eine Fluidverbindung zu einem am Ventilknoten **1** vorgesehenen Produktauslass **17** herstellt. Die Verbindungen zwischen der Produktleitung **16** und Produktanschluss **14** sowie zwischen Produktleitung **16** und Produktauslass **17** können lösbar ausgeführt sein.

An den Reinigungsmittelanschluss **15** ist eine Reinigungsleitung **18** angeschlossen, mit der eine Fluidverbindung zu einem am Ventilknoten **1** vorgesehenen Reinigungsmittelauslass **19** bewirkt wird. Die Verbindungen zwischen der Reinigungsleitung **18** und Reinigungsmittelanschluss **15** sowie zwischen Reinigungsleitung **18** und Reinigungsmittelauslass **19** können lösbar ausgeführt sein.

Für einige Baugrößen der Tankcontainer **7** ist vorteilhaft, die Produktleitung **16** und die Reinigungsleitung **18** mechanisch flexibel auszuführen, wodurch der Anschlusskopf **12** gegenüber dem Ventilknoten **1** bewegbar ist. In großen Abfüllanlagen kann es für schnelle Prozessabläufe vorteilhaft sein, mehrere Anschlussköpfe **12** zur gleichzeitigen Ankopplung mehrerer Tankcontainer **7** vorzusehen. Die Anschlussköpfe **12** sind dann vorteilhaft fest verrohrt an den Ventilknoten **1** angeschlossen.

Der Ventilknoten **1** ist mit den für seine Funktion als Schnittstelle zwischen der Prozessanlage **2** und dem Tankcontainer **7** notwendigen Mitteln ausgestattet. Diese Mittel umfassen eine innere Reinigungsleitung **20** zur Führung des Reinigungsmittels, welches über die Reinigungskupplung **6** aus der Prozessanlage **2** in den Ventilknoten **1** gelangt, zum Reinigungsmittelauslass **19.** Das Produkt, welches über die Produktkupplung **5** in den Ventilknoten **1** gelangt, wird mit einer inneren Produktleitung zum Produktauslass **17** geleitet. Ein Produktventil **22** kann vorgesehen sein und erlaubt es, den Fluidfluss zu unterbrechen, beispielsweise für Wartungsarbeiten an einer der Komponenten.

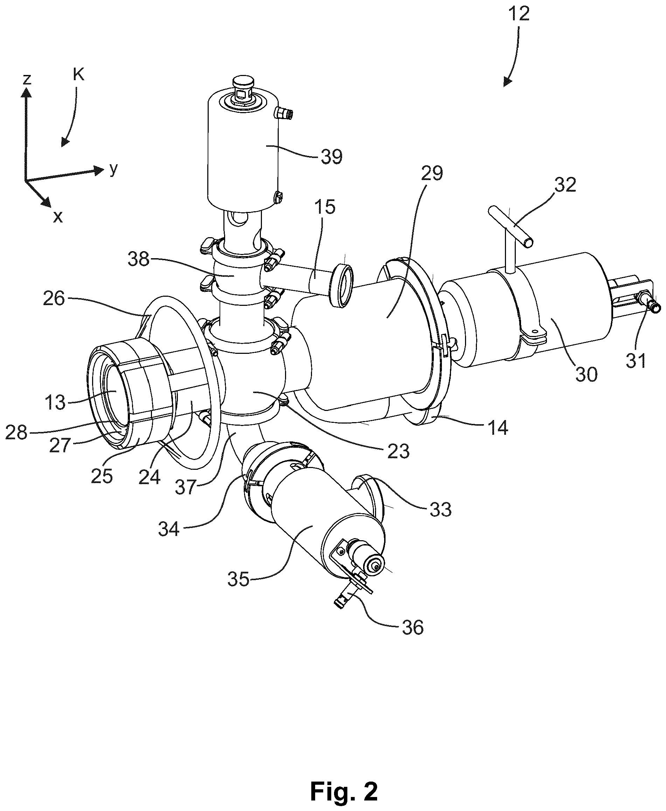

Der Anschlusskopf **12** ist in **Fig. 2** **in** einer perspektivischen Ansicht dargestellt. Zur Veranschaulichung ist ein Koordinatenkreuz **K** angegeben, in welchem die z-Achse eine Schwerkraftrichtung angibt, welche senkrecht auf einer durch x-Achse und y-Achse aufgespannten horizontalen Ebene steht.

Kern des beispielhaften Anschlusskopfes **12** ist ein Zentralgehäuse **23,** an welchem die weiteren Teile des Anschlusskopfes **12** angebracht sind.

Ein erstes Teil ist der Behälteranschluss **13.** Dieser umfasst ein Rohrstück **24,** auf dem eine Verschlusshülse **25** drehbar angeordnet ist. Die Drehung ist mittels eines Handrades **26** ausführbar. Die Verschlusshülse **25** kann ein innenliegendes Bajonett oder ein Gewinde aufweisen, womit eine lösbare Verbindung mit einem passenden Gegenstück an der Ventilvorrichtung **10** herstellbar ist. Auf einer oder wenigstens teilweise versenkt in eine von der Verschlusshülse **25** umgebenen Stirnfläche **27** ist eine Dichtung **28** angeordnet, um die Verbindung von Behälteranschluss **13** und Ventilvorrichtung **10** abzudichten.

Ein nächstes Teil des Anschlusskopfes **12** ist ein erstes Ventil **29.** Das erste Ventil **29** ist vorteilhaft auf der dem Behälteranschluss **13** gegenüberliegenden Seite des Zentralgehäuses **23** angeordnet. Dieses erste Ventil **29** ist in einer Fluidverbindung zwischen Zentralgehäuse **23** und Produktanschluss **14** angeordnet. Ein erster Antrieb **30** ist vorgesehen, mit welchem ein Schaltzustand des ersten Ventils **29** veränderbar ist. Ein erster Sensor **31** ist am ersten Antrieb **30** angebracht und dient der Überwachung der Funktion des ersten Antriebes **30.** Das Signal des ersten Sensors **31** ermöglicht es, auf den Schaltzustand des ersten Ventils **29** zu schließen.

Am ersten Antrieb **30** ist ein Handgriff **32** vorgesehen. Handrad **26** und Handgriff **32** erlauben es, den Anschlusskopf auszurichten, beispielsweise während des Transports von einem Aufbewahrungsort nahe dem Ventilknoten **1** an den Tankcontainer **7.** Weiterhin erlauben Handrad **26** und Handgriff **32** das Ausrichten des Anschlusskopfes **12** während der Montage des Anschlusskopfes **12** an die Ventilvorrichtung **10** des Tankcontainers **7.**

Ein weiteres Teil des Anschlusskopfes **12** ist der Abfluss **33.** In der Fluidverbindung zwischen dem Abfluss **33** und dem Zentralgehäuse **23** ist ein zweites Ventil **34** angeordnet. Mit Hilfe dieses zweiten Ventils **34** ist die Fluidverbindung zwischen Abfluss **33** und Zentralgehäuse herstellbar und trennbar. Die Schaltung des zweiten Ventils **34** zwischen diesen beiden Schaltzuständen ist mit Hilfe eines zweiten Antriebes **35** bewirkbar. Ein zweiter Sensor **36** ist am Antrieb **35** angebracht und gibt als Sensorsignal dessen Schaltzustand aus. Hierdurch kann auf den Schaltzustand des zweiten Ventils **34** geschlossen werden. Um die Abmessungen des Anschlusskopfes **12** in Richtung der z-Achse zu reduzieren und nur geringen Platzbedarf auf der Seite des Zentralgehäuses **23** zu erzeugen, an der der Abfluss **33** angeordnet ist, kann zwischen Zentralgehäuse **23** und zweitem Ventil **34** ein Abflussrohrbogen **37** eingebaut sein.

Der Abfluss **33** ist fluidverbunden mit in einer Abflussleitung **G1,** siehe **Fig. 1****,** die flexibel ausgeführt sein kann und mit einem Einlass **G2** des Ventilknotens **1** verbunden ist. Innerhalb des Ventilknotens **1** kann vorteilhaft ein Sammelbehälter **G3** vorgesehen sein, in welchem Fluid gesammelt wird, welches durch die Abflussleitung **G1** aus dem Anschlusskopf **12** abgeführt wird. Dieses Fluid kann beispielsweise benutztes Reinigungsfluid sein. Das im Sammelbehälter **G3** gesammelte Fluid wird über eine Entsorgungsleitung **G4** an eine Entsorgungseinrichtung der Prozessanlage **2** übergeben.

Auf der dem Abfluss **33** gegenüberliegenden Seite des Zentralgehäuses **23** ist eine Reinigungsvorrichtung **38** angeordnet. Diese ist in diesem Beispiel vorteilhaft mit einem dritten Antrieb **39** ausgestattet. Der Reinigungsmittelanschluss **15** des Anschlusskopfes **12** ist an der Reinigungsvorrichtung **38** angeordnet.

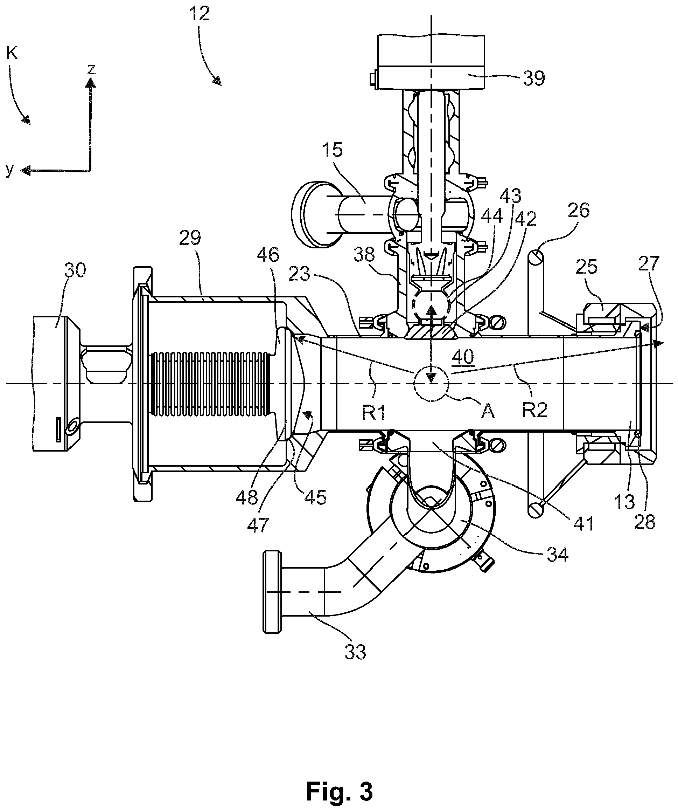

In **Fig. 3** ist ein Schnitt durch den Anschlusskopf **12** in der z-y-Ebene gezeigt.

Das Zentralgehäuse **23** besitzt einen Innenraum **40,** an dem das erste Ventil **29** und der Behälteranschluss **13** angeordnet sind. Der Innenraum **40** stellt eine Fluidverbindung zwischen diesen Komponenten her. Aus dem Innenraum **40** mündet eine Abflussöffnung **41** in den Abflussrohrbogen **37,** an den das zweite Ventil **34** angeschlossen ist.

Zum Befüllen des Tankcontainers 7 wird das erste Ventil **29** geöffnet und das zweite Ventil **34** geschlossen. Auf diese Weise wird eine Fluidverbindung zwischen Produktanschluss **14** und Behälteranschluss **13** geschaffen, über die Produkt aus der Prozessanlage **2** in den Behälter **9** des Tankcontainers **7** strömen kann. Die gleiche Schaltstellung der Ventile **29** und **34** liegt beim Entleeren des Behälters **9** vor.

Für den Produktstrom und dessen Einfluss auf das Produkt selbst sowie der Bildung von Rückständen im Innenraum **40** ist es vorteilhaft, das erste Ventil **29** und den Behälteranschluss **13** sich gegenüberliegend am Innenraum **40** anzuordnen.

Damit Keimeintrag während des Befüllens oder Entleerens des Behälters **9** verhindert wird, ist es vorteilhaft, wenn der Innenraum **40** nach Herstellen der mechanischen und abgedichteten Verbindung zwischen dem Behälteranschluss **13** und Ventilvorrichtung **10** reinigbar ist. Hierzu umfasst der Anschlusskopf **12** die Reinigungsvorrichtung **38.**

Die Reinigungsvorrichtung **38** weist einen verstellbaren Reinigerverschluss **42** auf, mit dem die Reinigungsvorrichtung **38** gegen den Innenraum **40** absperrbar gestaltet ist.

Die Reinigungsvorrichtung **38** ist als verstellbarer Strahlreiniger ausgeführt. Beispiele für solche verstellbaren Strahlreiniger geben die Gebrauchsmuster DE 20 2004 012 949 U1 und DE 20 2005 004 711 U1 an.

Teil der Reinigungsvorrichtung **38** ist eine Sprühkugel **43,** die wenigstens einen Strahlaustritt **44** besitzt, vorzugsweise eine Mehrzahl solcher Strahlaustritte **44.**

Die Reinigungsvorrichtung **38** ist in Fig. 3 in einer Ruhestellung gezeigt, in der sie vom Innenraum **40** getrennt ist. In dieser Ruhestellung ist die Sprühkugel **43** durch den Reinigerverschluss **42** vom Innenraum **40** abgedichtet getrennt. Mit Hilfe des dritten Antriebes **39** ist die Sprühkugel **43** und damit die Reinigungsvorrichtung **38** aus der Ruhestellung in eine Reinigungsstellung **A** bringbar. In der Reinigungsstellung befindet sich die Sprühkugel **43** im Innenraum **40** des Zentralgehäuses. Der Strahlaustritt **44** oder die Strahlaustritte **44** sind in der Reinigungsstellung so angeordnet, dass durch den Reinigungsmittelanschluss **15** einströmendes Reinigungsmittel strahlförmig in den Innenraum **40** einströmt.

Vorzugsweise ist ein Reinigungsstrahl **R1** auf eine Stirnseite **45** eines Ventiltellers **46** des ersten Ventils **29** gerichtet, so dass die dem Innenraum **40** zugewandten Teile des ersten Ventils **29** durch die Reinigungsvorrichtung **38** gereinigt werden. Durch Anlüften des Ventiltellers **46** ist es möglich, den Ventilsitz **47** und die Ventildichtung **48** gründlich zu reinigen.

Der Behälteranschluss **13** wird ebenfalls von einem Reinigungsstrahl oder mehreren Reinigungsstrahlen erfasst und so gereinigt.

Darüber hinaus tritt der Reinigungsstrahl **R2** durch den Behälteranschluss **13** hindurch und gelangt in die Ventilvorrichtung **10** des Tankcontainers **7.** Der Strahl reinigt aufgrund seiner mechanischen Wirkung des unter Druck stehenden Reinigungsfluids gründlich diese Ventilvorrichtung **10.**

Anzahl und Form der Strahlaustritte **44** werden mit der Zielsetzung einer zuverlässigen Reinigung der Oberflächen des Innenraums **40,** des Behälteranschlusses **13** und der Ventilvorrichtung **10** gewählt.

Die Reinigungsvorrichtung **38** ist auf der Seite des Innenraums **40** angeordnet, die der Abflussöffnung **41** gegenüberliegt. Dies schafft auf einfache Weise einen raumsparenden Aufbau der Reinigungsvorrichtung **38,** bei der die Abflussöffnung **41** an der Stelle des Innenraums **40** angeordnet ist, die im Bezug zur Schwerkraftrichtung am tiefsten liegt. Die beim Reinigungsvorgang entstehenden Fluide werden so gründlich durch den Abfluss **33** aus dem Innenraum entfernt.

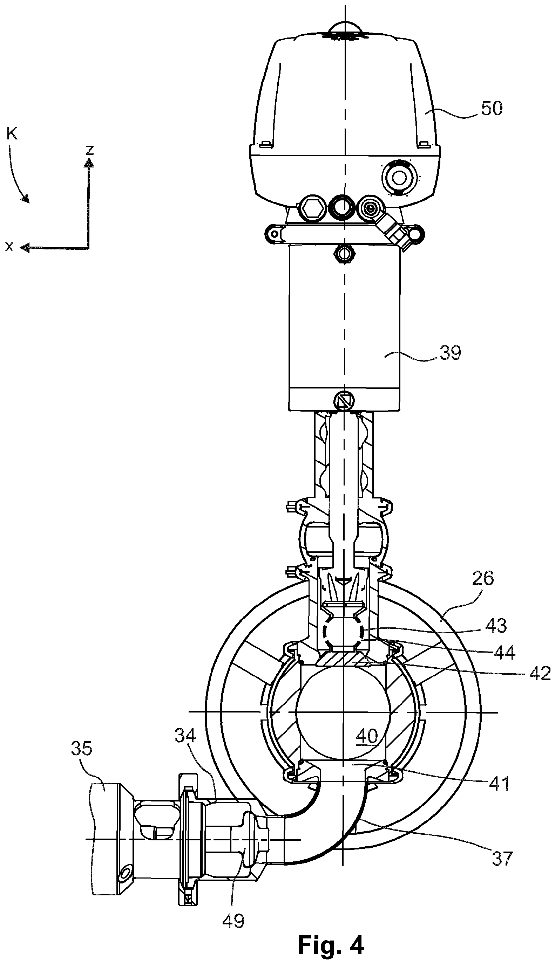

Die **Fig. 4** zeigt einen Schnitt durch den Anschlusskopf **12** in der z-x-Ebene.

Dieser Schnitt verdeutlicht die Gestaltung des Anschlusskopfes **12** im Hinblick auf restfreies Ablaufen von Fluiden während des Reinigungsvorgangs. Die Abflussöffnung **41** ist in der bestimmungsgemäßen Orientierung des Anschlusskopfes **12** am tiefsten Punkt des Innenraumes **40** angeordnet. Fluid tritt durch die Abflussöffnung **41** hindurch und gelangt in den Abflussrohrbogen **37,** der in das zweite Ventil **34** mündet. Diese Mündung ist durch das Schließelement **49** des zweiten Ventils **34** dicht verschließbar. Das Schließelement **49** ist durch den zweiten Antrieb **35** in einer Hubbewegung verschiebbar und in eine Position bringbar, in der eine Fluidverbindung zwischen dem Inneren des Abflussrohrbogens **37** und dem Abfluss **33** besteht. Durch diese Anordnung und Gestaltung fließt das Fluid vollständig aus dem Innenraum **40** ab, bevor das zweite Ventil **34** geschlossen wird.

In **Fig. 4** ist ein Steuerkopf **50** gezeigt, der am dritten Antrieb **39** angeordnet ist. Dieser Steuerkopf ist dazu eingerichtet, den dritten Antrieb **39** zu steuern und damit die Verschiebung der Sprühkugel **43** zwischen der Ruhestellung und der Reinigungsstellung **A** zu bewirken. Der Steuerkopf **50** kann so eingerichtet sein, weitere Steuerungsfunktionen auszuführen, beispielsweise die Steuerung von erstem und zweitem Antrieb **30** und **35.**

Erster, zweiter und dritter Antrieb **30, 35** und **39** können druckmittelbetrieben ausgeführt sein, beispielsweise pneumatisch. Die Druckmittelversorgung kann über ein Leitungsbündel geschehen, in welchem auch die Produktleitung **16** und die Reinigungsleitung **18** zusammengefasst sind. Ebenfalls kann eine Leitung für den Abfluss **33** enthalten sein. Diese und andere Anschlüsse und Leitungen können über den Ventilknoten **1** geführt sein. Die Steuerungseinrichtung des Ventilknotens **1** kann auch die Steuerung des Anschlusskopfes **12** übernehmen, wozu noch elektrische Anschlüsse für den Steuerkopf **50** vorgesehen sein können.

### Bezugszeichenliste

- 1: Ventilknoten
- 2: Prozessanlage
- 3: Produktverrohrung
- 4: Reinigungseinrichtung
- 5: Produktkupplung
- 6: Reinigungskupplung
- 7: Tankcontainer
- 8: Rahmen
- 9: Behälter
- 10: Ventilvorrichtung
- 11: Mannloch
- 12: Anschlusskopf
- 13: Behälteranschluss
- 14: Produktanschluss
- 15: Reinigungsmittelanschluss
- 16: Produktleitung
- 17: Produktauslass
- 18: Reinigungsleitung
- 19: Reinigungsmittelauslass
- 20: innere Reinigungsleitung
- 21: innere Produktleitung
- 22: Produktventil
- 23: Zentralgehäuse
- 24: Rohrstück
- 25: Verschlusshülse
- 26: Handrad
- 27: Stirnfläche
- 28: Dichtung
- 29: erstes Ventil
- 30: erster Antrieb
- 31: erster Sensor
- 32: Handgriff
- 33: Abfluss
- 34: zweites Ventil
- 35: zweiter Antrieb
- 36: zweiter Sensor
- 37: Abflussrohrbogen
- 38: Reinigungsvorrichtung
- 39: dritter Antrieb
- 40: Innenraum
- 41: Abflussöffnung
- 42: Reinigerverschluss
- 43: Sprühkugel
- 44: Strahlaustritt
- 45: Stirnseite
- 46: Ventilteller
- 47: Ventilsitz
- 48: Ventildichtung
- 49: Schließelement
- 50: Steuerkopf
- G1: Abflussleitung
- G2: Einlass
- G3: Sammelbehälter
- G4: Entsorgungsleitung
- A: Reinigungsstellung
- K: Koordinatenkreuz
- R1: erster Reinigungsstrahl
- R2: zweiter Reinigungsstrahl

## Patentansprüche

1. Anschlusskopf (12) mit einem Innenraum (40), einem mit dem Innenraum (40) fluidverbundenen Behälteranschluss (13), welcher für eine Befüllung oder eine Entleerung eines Behälters (9) mit einem Fluid an eine an dem Behälter (9) angebrachten Ventilvorrichtung (10) fluidführend anschließbar ist, einem mit dem Innenraum (40) fluidverbundenen Produktanschluss (14) und einem mit dem Innenraum (40) fluidverbundenen Abfluss (33), wobei der Anschlusskopf (12) ein erstes Ventil (29), mit welchem ersten Ventil (29) der Produktanschluss (14) gegen den Innenraum (40) absperrbar ist, ein zweites Ventil (34), mit welchem zweiten Ventil (34) der Abfluss (33) gegen den Innenraum (40) absperrbar ist, und eine Reinigungsvorrichtung (38), die zur Reinigung des Innenraumes (40) und des Behälteranschlusses (13) ausgebildet und angeordnet ist, umfasst, **dadurch gekennzeichnet, dass** die Reinigungsvorrichtung (38) einen Strahlreiniger umfasst, und dass der Strahlreiniger einen Strahlaustritt (44) aufweist, der zum Erzeugen eines durch den Behälteranschluss (13) aus dem Anschlusskopf (12) austretenden Reinigungsstrahles (R2) eingerichtet ist.

2. Anschlusskopf nach Anspruch 1, wobei der Strahlreiniger eine Sprühkugel (43) umfasst.

3. Anschlusskopf nach einem der vorhergehenden Ansprüche, wobei die Reinigungsvorrichtung(38) gegen den Innenraum (40) absperrbar gestaltet ist.

4. Anschlusskopf nach einem der vorhergehenden Ansprüche, wobei die Reinigungsvorrichtung (38) in eine Reinigungsstellung (A) innerhalb des Innenraums (40) und in eine Ruhestellung, in der sie vom Innenraum (40) getrennt ist, bringbar gestaltet ist.

5. Anschlusskopf nach einem der vorhergehenden Ansprüche, wobei die Reinigungsvorrichtung (38) auf einer Seite des Innenraums (40) angeordnet ist, die einer aus dem Innenraum (40) ausmündenden Abflussöffnung (41) gegenüberliegt.

6. Anschlusskopf nach einem der vorhergehenden Ansprüche, wobei die Reinigungsvorrichtung (38) zur Reinigung des Innenraums (40) einschließlich der dem Innenraum (40) zugewandten Teile des ersten Ventils (29) ausgebildet und angeordnet ist.

7. Anschlusskopf nach einem der vorhergehenden Ansprüche, wobei das erste Ventil (29) einen Ventilsitz (47) und einen geschlossenen und in einer Hubbewegung verstellbaren Ventilteller (46) aufweist.

8. Ventilknoten (1) zur Befüllung oder zur Entleerung eines Behälters (9), der vorzugsweise in einem Tankcontainer (7) angeordnet ist, mit einem Produktauslass (17) und einem Reinigungsmittelauslass (19), wobei der Ventilknoten (1) einen Anschlusskopf (12) nach einem der vorhergehenden Ansprüche umfasst und der Produktauslass (17) mit einer Produktleitung (16) mit dem Produktanschluss (14) des Anschlusskopfes (12) und mit einer Reinigungsleitung (18) mit der Reinigungsvorrichtung (38) des Anschlusskopfes (12) verbunden ist.

## Claims

1. Connector head (12) comprising an interior space (40), a tank connector (13) which is in fluid communication with the interior space (40) and which, in order to fill a tank (9) with a fluid or empty it of a fluid, can be fluidly connected to a valve device (10) mounted on the tank (9), a product connector (14) in fluid communication with the interior space (40), and a discharge port (33) in fluid communication with the interior space (40), wherein the connector head (12) comprises a first valve (29), by means of which first valve (29) the product connector (14) can be shut off from the interior space (40), a second valve (34), by means of which second valve (34) the discharge port (33) can be shut off from the interior space (40), and a cleaning device (38) formed and arranged to clean the interior space (40) and the tank connector (13), **characterised in that** the cleaning device (38) comprises ajet cleaner, and **in that** the jet cleaner has a jet outlet (44) configured to generate a cleaning jet (R2) leaving the connector head (12) through the tank connector (13).

2. Connector head as claimed in claim 1, wherein the jet cleaner comprises a spray ball (43).

3. Connector head as claimed in any one of the preceding claims, wherein the cleaning device (38) is designed so that it can be shut off from the interior space (40).

4. Connector head as claimed in any one of the preceding claims, wherein the cleaning device (38) is designed so that it can be moved to a cleaning position (A) inside the interior space (40) and to an inoperative position in which it is separated from the interior space (40).

5. Connector head as claimed in any one of the preceding claims, wherein the cleaning device (38) is arranged on one side of the interior space (40) which is opposite a discharge opening (41) issuing out of the interior space (40).

6. Connector head as claimed in any one of the preceding claims, wherein the cleaning device (38) is formed and arranged to clean the interior space (40), including the parts of the first valve (29) facing the interior space (40).

7. Connector head as claimed in any one of the preceding claims, wherein the first valve (29) has a valve seat (47) and a closed valve plate (46) which can be displaced in a stroke movement.

8. Valve block (1) for filling or emptying a tank (9), which is preferably arranged in a tank container (7), comprising a product outlet (17) and a cleaning agent outlet (19), wherein the valve block (1) comprises a connector head (12) as claimed in any one of the preceding claims, and the product outlet (17) is connected by a product line (16) to the product connector (14) of the connector head (12) and by a cleaning line (18) to the cleaning device (38) of the connector head (12).

## Revendications

1. Tête de raccordement (12) avec un espace intérieur (40), un raccord de récipient (13) relié de manière fluidique à l'espace intérieur (40) qui peut être raccordé par guidage de fluide pour un remplissage ou une vidange d'un récipient (9) avec un fluide à un dispositif de vanne (10) monté au niveau du récipient (9), un raccord de produit (14) relié en fluide à l'espace intérieur (40) et une évacuation (33) reliée en fluide à l'espace intérieur (40), dans lequel la tête de raccordement (12) comporte une première vanne (29), avec laquelle première vanne (29) le raccord de produit (14) peut être bloqué contre l'espace intérieur (40), une seconde vanne (34), avec laquelle seconde vanne (34) l'évacuation (33) peut être bloquée contre l'espace intérieur (40), et un dispositif de nettoyage (38) qui est réalisé et agencé pour le nettoyage de l'espace intérieur (40) et du raccord de récipient (13), **caractérisée en ce que** le dispositif de nettoyage (38) comporte un nettoyeur à jet, et que le nettoyeur à jet présente une sortie de jet (44) qui est configurée pour la génération d'un jet de nettoyage (R2) sortant à travers le raccord de récipient (13) de la tête de raccordement (12).

2. Tête de raccordement selon la revendication 1, dans laquelle le nettoyeur à jet comporte un cône de pulvérisation (43).

3. Tête de raccordement selon l'une des revendications précédentes, dans laquelle le dispositif de nettoyage (38) est conçu de manière à pouvoir être bloqué contre l'espace intérieur (40).

4. Tête de raccordement selon l'une des revendications précédentes, dans laquelle le dispositif de nettoyage (38) est conçu de manière à pouvoir être amené dans une position de nettoyage (A) à l'intérieur de l'espace intérieur (40) et dans une position de repos, dans laquelle il est séparé de l'espace intérieur (40).

5. Tête de raccordement selon l'une des revendications précédentes, dans laquelle le dispositif de nettoyage (38) est agencé sur un côté de l'espace intérieur (40) qui est opposé à une ouverture d'évacuation (41) débouchant de l'espace intérieur (40).

6. Tête de raccordement selon l'une des revendications précédentes, dans laquelle le dispositif de nettoyage (38) est réalisé et agencé pour le nettoyage de l'espace intérieur (40) y compris des parties tournées vers l'espace intérieur (40) de la première vanne (29).

7. Tête de raccordement selon l'une des revendications précédentes, dans laquelle la première vanne (29) présente un siège de vanne (47) et une tête de vanne (46) fermée et réglable dans un mouvement de levage.

8. Nœud de vanne (1) pour le remplissage ou pour la vidange d'un récipient (9) qui est agencé de préférence dans un conteneur-citerne (7), avec une sortie de produit (17) et une sortie de moyen de nettoyage (19), dans lequel le nœud de vanne (1) comporte une tête de raccordement (12) selon l'une des revendications précédentes et la sortie de produit (17) est reliée à une conduite de produit (16) avec le raccord de produit (14) de la tête de raccordement (12) et avec une conduite de nettoyage (18) avec le dispositif de nettoyage (38) de la tête de raccordement (12).
